# FASCICULE DE BREVET EUROPEEN

(11) **EP 2 641 756 B1**
(45) Date de publication et mention de la délivrance du brevet: **18.05.2016**
(21) Numéro de dépôt: 13001493.9
(22) Date de dépôt: 22.03.2013
(51) Int. Cl.: B60C 23/04

(54) **Dispositif de fixation d'un boîtier électronique dans la roue d'un véhicule et procédé de fabrication d'un pneumatique adapté**
Befestigungsvorrichtung eines elektrischen Gehäuses im Rad eines Fahrzeugs, und Herstellungsverfahren eines geeigneten Reifens
Device for attaching an electrical housing in the wheel of a vehicle and adapted method for manufacturing a tyre

(30) Priorité: 23.03.2012 FR 1252655
(43) Date de publication de la demande: 25.09.2013
(73) Titulaire: LDL Technology, 31520 Ramonville Saint Agne (FR)
(72) Inventeur: Bernard DE Vedelly, Thibault, 31600 Muret (FR)
(74) Mandataire: Richebourg, Michel François

(56) Documents cités:
- EP-A1- 1 721 761
- EP-A2- 1 533 601
- WO-A1-2004/002758
- DE-A1-102007 010 782
- FR-A1- 2 899 150
- US-B1- 7 377 156

## Description

La présente invention a trait au domaine de la détection de paramètres à l'intérieur des roues d'un véhicule et notamment aux adaptations permettant de fixer un boîtier de détection à l'intérieur d'une roue dans les meilleures conditions.

### DESCRIPTION DE L'ART ANTÉRIEUR

Il existe une pluralité de solutions de fixation des boîtiers électroniques de mesure de paramètres telles la température et la pression à l'intérieur d'un pneumatique d'une roue.

Ainsi par exemple, une solution consiste à fixer ces boîtiers par l'intermédiaire du trou de valve de la jante comme décrit dans le document EP 1647422. Une telle solution peut être considérée comme fastidieuse et requiert une solution spécifique qui dépend du nombre et de la diversité des profils des jantes à équiper.

Une autre solution consiste à utiliser une fixation circonférentielle au moyen par exemple d'un câble comme décrit dans le document EP 2392480. Cette solution reste coûteuse à produire et certains profils de jante très étroits ne permettent pas cette installation. Une autre solution décrite dans le document EP1721761 consiste à fixer un support de boîtier sur la surface interne circonférentielle de la jante au moyen dé rivets traversant auto-perceurs puis à venir fixer le boitier sur le support. Comme la précédente, une telle solution est coûteuse et requiert la déformation de la jante. Ces trois groupes de solutions ont pour autre inconvénient de proposer une disposition du boîtier qui constitue un obstacle aux flancs du pneumatique lors des opérations d'installation sur jante ou d'enlèvement. Une solution permettant de résoudre l'inconvénient ci-dessus consisterait à fixer le boîtier aux parois internes du pneumatique comme décrit dans les documents FR2899150 ;et en accord avec les préambules respectifs de revendications 1 et 15 DE102007010782 et WO2004/002758. Une telle solution présente néanmoins plusieurs inconvénients, dont les suivants :
- la proximité du boîtier avec la bande de roulement du pneumatique le soumet aux mêmes chocs, changements de températures et déformations (telle la pliure) que ceux subis selon un large spectre de fréquences par le pneumatique,
- la force centrifuge tend à maintenir en position le capteur mais également à orienter vers l'extérieur toute matière contenue dans le pneumatique tendant alors à obstruer les orifices du ou des capteurs.

### DESCRIPTION DE L'INVENTION

Partant de cet état de fait, la demanderesse a mené des recherches visant à proposer une solution de fixation résolvant les inconvénients de l'art antérieur. Ces recherches ont abouti à la conception et à la réalisation d'un dispositif de fixation particulièrement judicieux et peu onéreux.

Selon l'invention, ce dispositif de fixation d'un boîtier de prise de mesure sur la paroi interne d'un pneumatique, est remarquable en ce qu'il comprend au moins un élément d'entretoisement interposé entre le boîtier et ladite paroi interne de façon à créer un espace entre le boîtier et ladite paroi interne.

Cette caractéristique est particulièrement avantageuse en ce qu'elle propose une fixation du boîtier indépendante de la jante. Elle propose en outre une fixation à la paroi interne du pneumatique autorisant ainsi les opérations de montage et de démontage du pneumatique sur la jante, sans risque d'arrachement du boîtier.

De plus, elle propose une fixation suspendue, c'est à dire une fixation à la paroi interne mais à distance de cette dernière afin d'éviter que la plupart des déformations (pliures), des chocs et des échauffements auxquels elle est soumise, ne se reporte sur le boîtier. Le dispositif de fixation de l'invention résout ainsi les inconvénients des dispositifs de l'art antérieur.

Selon une autre caractéristique particulièrement avantageuse, ce dispositif de fixation est remarquable en ce qu'il comprend au moins une projection constituant l'élément d'entretoisement dont une extrémité est fixée à ladite paroi interne et se projetant vers l'intérieur dudit pneumatique, ledit boîtier étant fixé à ladite projection à une certaine distance de ladite paroi interne de sorte qu'un espace soit créé entre le boîtier et ladite paroi interne d'où se dresse la projection.

Selon une autre caractéristique particulièrement avantageuse, ladite projection est préformée d'une surface d'appui et de retenue pour le boîtier, disposée à une certaine distance de ladite paroi interne de sorte qu'un espace soit créé entre le boîtier et ladite paroi interne d'où se dresse la projection. Ainsi, c'est la projection qui est préformée pour servir de butée de positionnement audit boîtier, positionnement créant l'espace entre le boîtier et la paroi du pneumatique.

D'autres caractéristiques liées à la préformation desdites projections ont été conçues ainsi par exemple :
- ladite projection est préformée d'un changement de section afin de créer une surface d'appui pour le boîtier,
- ladite projection comprend deux changements de sections créant deux épaulements entre lesquels se dispose ledit boîtier afin de servir d'une part, de surface d'appui et d'autre part, de surface de retenue,
- ladite projection est réalisée dans un matériau élastique et est préformée de sorte qu'une traction sur son extrémité libre assure le rétrécissement de la surface de retenue pour autoriser l'installation du boîtier.

Selon une autre caractéristique particulièrement judicieuse, ladite projection se dresse à partir de la face interne de la bande de roulement du pneumatique. Ainsi, la force centrifuge appliquée au boîtier tendra lors de la rotation de la roue à maintenir en position ledit boîtier sur la projection et notamment sur la surface d'appui préformée dans cette dernière, sans fragiliser sa fixation. Par la présence de l'élément entretoisement de l'invention, la fixation à la face interne de la bande de roulement est rendue possible.

La disposition du boîtier fixé par l'intermédiaire de l'élément d'entretoisement à la face interne de la bande de roulement sans contact du boîtier avec ladite face permet en outre d'orienter ce dernier de sorte que le ou les orifices de prise de mesure donnant accès au capteur soient orientés vers ladite face interne de bande de roulement du pneumatique. Une telle disposition est particulièrement avantageuse en ce qu'elle garantit la non obstruction desdits orifices du fait que la force centrifuge assure la projection vers l'extérieur de tout élément présent dans le pneumatique. Afin de garantir cette ouverture, ledit capteur est équipé d'un capuchon évitant l'obstruction de son orifice de prise de mesure lors du coulage de la matière encapsulante dans le boîtier. De telles dispositions ont pour grand avantage d'éviter la présence d'un couvercle de fermeture et de protection du boîtier.

Selon une autre caractéristique préférée, ledit dispositif comprend deux projections ce qui induit que le boîtier est préformé de deux orifices de fixation adoptant sensiblement le même écartement, pour venir s'engager sur les deux projections. Bien entendu, le nombre de projections n'est pas limitatif, le principe étant d'offrir une surface d'appui constituée par un ou plusieurs points d'appui disposés à distance de la paroi interne et adaptée à la géométrie du boîtier. De même, leur disposition dans le pneumatique n'est pas limitative.

Selon une autre caractéristique particulièrement avantageuse, ladite projection est associée à la face supérieure d'une pièce plane dont la face inférieure est collée à ladite paroi interne. Cette pièce plane peut également supporter plusieurs projections.

Selon une autre caractéristique, ladite projection est réalisée dans un matériau élastique et, selon un mode de réalisation préféré, dans le même matériau élastique que le pneumatique. Un tel choix de matériau permet non seulement d'envisager facilement une fixation par collage desdites projections à la paroi interne du pneumatique mais également de proposer un procédé de fabrication du pneumatique dans lequel la ou lesdites projections sont obtenues par moulage du pneumatique. Ainsi, un autre objet de l'invention réside dans le procédé de fabrication d'un pneumatique adapté au dispositif de fixation de l'invention c'est à dire où ledit pneumatique comprend au moins une projection constituant un élément d'entretoisement dont une extrémité est fixée à la paroi interne du pneumatique et se projette vers l'intérieur dudit pneumatique, un boîtier de prise de mesure étant fixé à ladite projection à une certaine distance de ladite paroi interne de sorte qu'un espace soit créé entre le boîtier et ladite paroi interne d'où se dresse la projection. Ce procédé est remarquable en ce qu'il consiste à mouler ladite au moins une projection constituant l'élément d'entretoisement dans la paroi interne du pneumatique.

Selon un mode de réalisation préféré, ce procédé consiste à mouler deux projections.

Une ou plusieurs projections issues du boîtier peuvent constituer l'élément d'entretoisement. Ainsi selon une autre caractéristique de l'invention, ledit boîtier est préformé d'au moins une projection constituant l'élément d'entretoisement venant se fixer à la paroi interne du pneumatique en créant un espace entre ledit boîtier et ladite paroi interne.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif conforme à l'invention.

### BRÈVE DESCRIPTION DES DESSINS

La figure 1 est un dessin schématique d'une vue de côté en coupe d'un pneumatique accueillant un mode de réalisation d'un dispositif conforme à l'invention;
La figure 2 est un dessin schématique d'une vue de face en coupe selon le plan de coupe II-II défini sur la figure 1 du pneumatique de la figure 1;
La figure 3 est un dessin schématique d'une vue de face en coupe de détail du dispositif seul;
La figure 4 est un dessin schématique d'une vue de face en coupe de détail d'un autre mode de réalisation du dispositif seul;
La figure 5 est un dessin schématique d'une vue de face en coupe de détail d'un autre mode de réalisation du dispositif seul;
La figure 6 est un dessin schématique d'une vue de côté en coupe selon le plan de coupe VI-VI défini sur la figure 7 d'un pneumatique accueillant un autre mode de réalisation d'un dispositif conforme à l'invention;
La figure 7 est un dessin schématique d'une vue de face en coupe du pneumatique de la figure 6.

### DESCRIPTION DES MODES DE RÉALISATION PRÉFÉRÉS

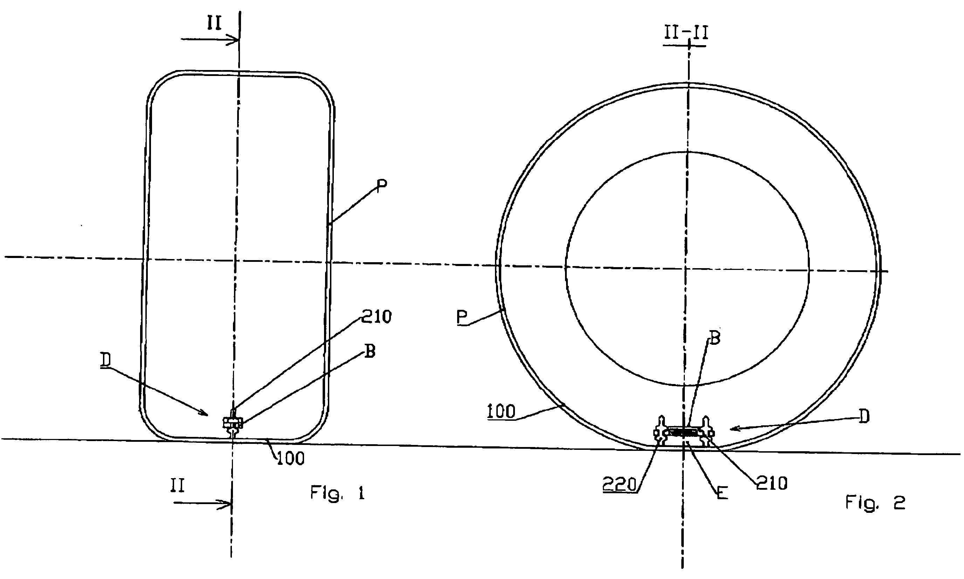

Tel qu'illustré sur le dessin des figures 1 et 2, le dispositif de fixation référencé D assure la solidarisation d'un boîtier de prise de mesure référencé B à la face interne 100 de la bande de roulement d'un pneumatique P au niveau de son plan de symétrie vertical.

Ce dispositif D comprend deux projections 210 et 220 se projetant à partir de ladite face interne 100 et sur lesquelles ledit boîtier B vient se fixer afin d'adopter une position suspendue entre le centre du pneumatique P et ladite face interne 100. En effet, comme illustré, un espace E est créé entre le boîtier B et ladite face interne 100.

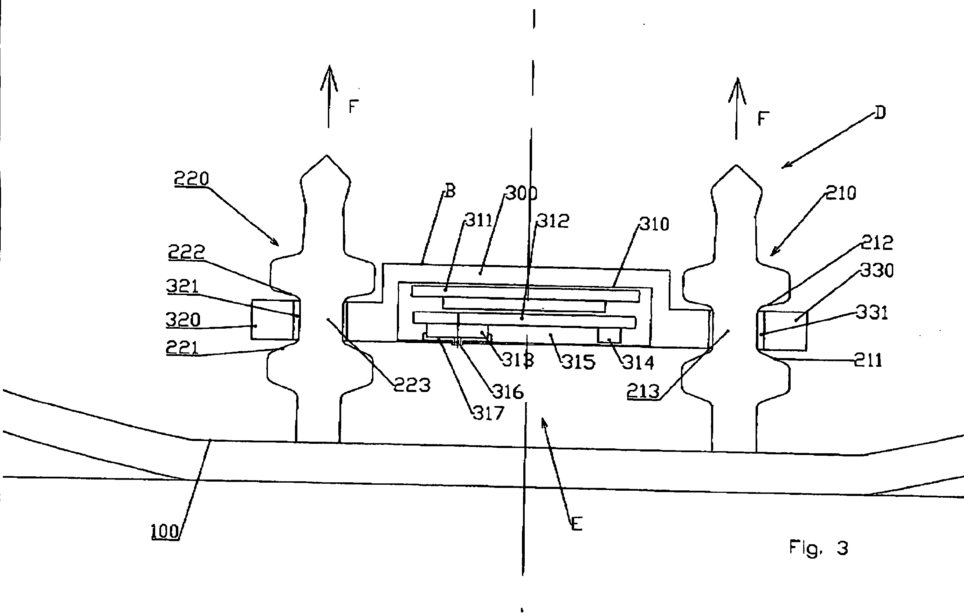

Comme illustrées sur le dessin de la figure 3, lesdites projections 210 et 220 sont cylindriques, identiques et préformées de plusieurs changements de section permettant de créer une surface d'appui 211 et 221 pour le boîtier B à distance de ladite face interne 100 ainsi qu'une surface de retenue 212 et 222, de part et d'autre d'une portion 213 et 223 de projection de section inférieure à celles des portions formant surfaces d'appui et/ou de retenue. Ces projections sont orientées selon un rayon mais viennent se positionner perpendiculairement au sol lors de l'aplatissement du pneumatique P comme illustrées.

Ledit boîtier B comporte une coque 300 formant un volume concave d'accueil 310 et ouvert vers ladite face interne 100. De part et d'autre de ce volume d'accueil, ladite coque 300 est équipée de deux projections 320 et 330 formant oreilles de fixation percées d'un orifice 321 et 331 dont l'écartement correspond sensiblement à l'écartement desdites projections qui viennent s'y engager. Ce sont ces orifices et les surfaces dans lesquelles ils sont pratiqués qui constituent les surfaces fonctionnelles avec lesquelles coopèrent les surfaces d'appui 211, 221 et de retenue 212, 222 préformées dans les projections.

En effet, les projections 210 et 220 s'enfilent dans lesdits orifices 331 et 321 de façon à ce que les oreilles 320 et 330 soient positionnées entre les surfaces d'appui 221 et 211 et les surfaces de retenue 222 et 212.
La force centrifuge s'appliquant au boîtier B lors de la rotation de la roue va tendre à maintenir ce dernier contre lesdites surfaces d'appui 211 et 221, garantissant ainsi son maintien en position.

Afin d'autoriser la mise en place du boîtier 300 au niveau des portions 213 et 223 des projections 210 et 220, ces dernière, qui sont avantageusement fabriquées dans un matériau élastique, sont préformées de sorte qu'une traction manuelle vers le centre du pneumatique selon la flèche F sur leur extrémité libre assure un rétrécissement de l'excroissance constituant la surface de retenue 212 et 222 permettant ainsi le passage de ladite excroissance à travers les orifices 331 et 321 de fixation du boîtier B et son épanouissement, une fois la traction terminée pour mettre en ouvre leur fonction de retenue.

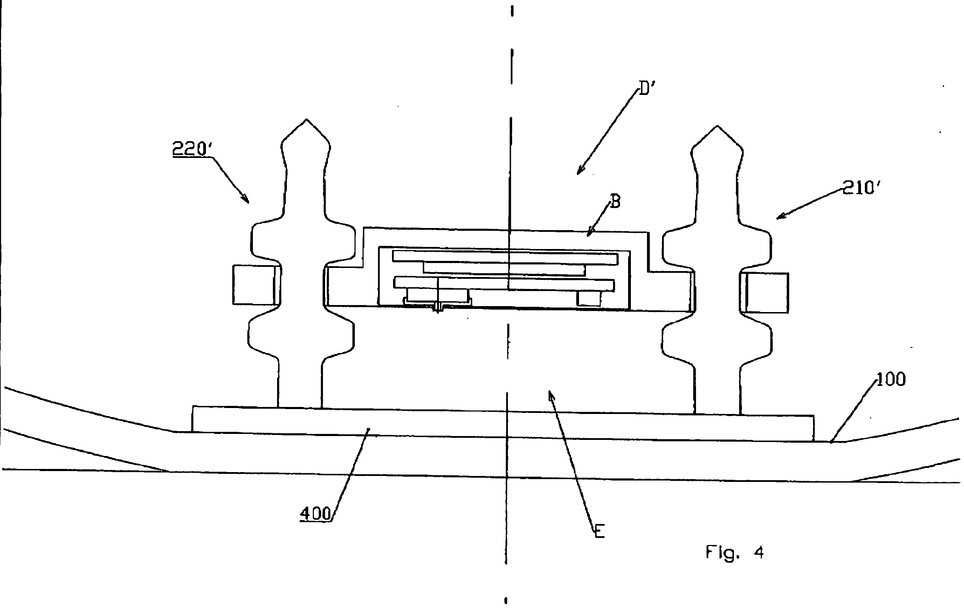

Alors que le mode de réalisation illustré par le dessin de la figure 2 montre deux projections dont une extrémité est directement associée par exemple par collage à la paroi interne 100, un autre mode de réalisation est envisagé et illustré par le dessin de la figure 4.

Sur cette figure 4, le dispositif D' reprend les deux projections 210' et 220' issues de la face supérieure d'une pièce plane 400 dont la face intérieure est collée à ladite paroi interne 100. Une telle configuration permet de faciliter l'adhésion à la paroi interne 100 en augmentant la surface de contact sans déroger aux principes de l'invention qui consistent à garder en suspension le boîtier par rapport à ladite face interne 100. Selon un mode de réalisation non illustré, au moins une partie de l'extrémité basse de la projection vient s'introduire dans l'épaisseur du pneumatique.

Une caractéristique particulièrement avantageuse de l'invention que permet de mettre en oeuvre cette disposition suspendue créant un espace E entre ledit boîtier B et ladite face interne 100, réside dans l'orientation du boîtier, de son contenu par rapport à ladite face interne et des dispositions ayant trait audit contenu.

Comme illustré sur les dessins des figures 3 et 4, le volume d'accueil 310 de la coque 300 dudit boîtier B contient une batterie 311, un circuit imprimé 312, un capteur de pression 313 ainsi qu'une antenne RF 314, l'ensemble des composants étant noyé dans une matière encapsulante 315. Ce volume d'accueil 310 est ouvert sur la face du boîtier orientée vers la face interne 100 et le capteur de pression 313 comporte un orifice 316 de prise de mesure s'ouvrant sur ledit espace E. Comme expliquée plus haut, une telle disposition garantit qu'aucune matière ne vienne obstruer ledit orifice 316 du fait que la force centrifuge tendra à entraîner vers l'extérieur tout matière contenue dans la roue empêchant ainsi toute obturation.

Afin que cette obturation n'intervienne pas lors de la fabrication du boîtier dans l'opération d'encapsulation par la matière 315, ledit capteur de pression 313 est avantageusement équipé d'un capuchon 317 évitant l'obstruction de son orifice 316 de prise de mesure lors du coulage de la matière encapsulante 315 dans le boîtier.

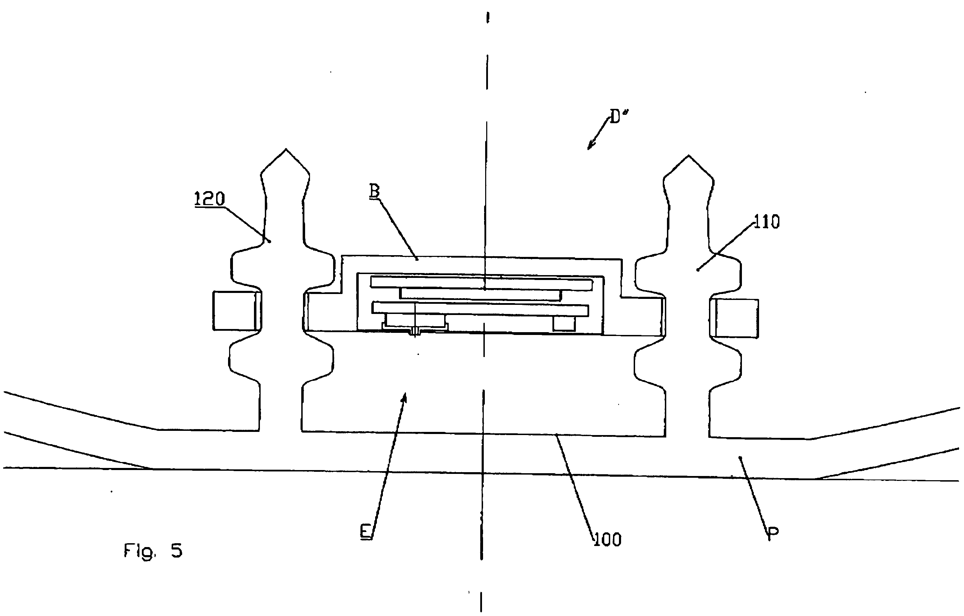

La figure 5 illustre un mode de réalisation où les projections 110 et 120 du dispositif D" sont directement issues du moulage du pneumatique conformément au procédé de fabrication de l'invention.

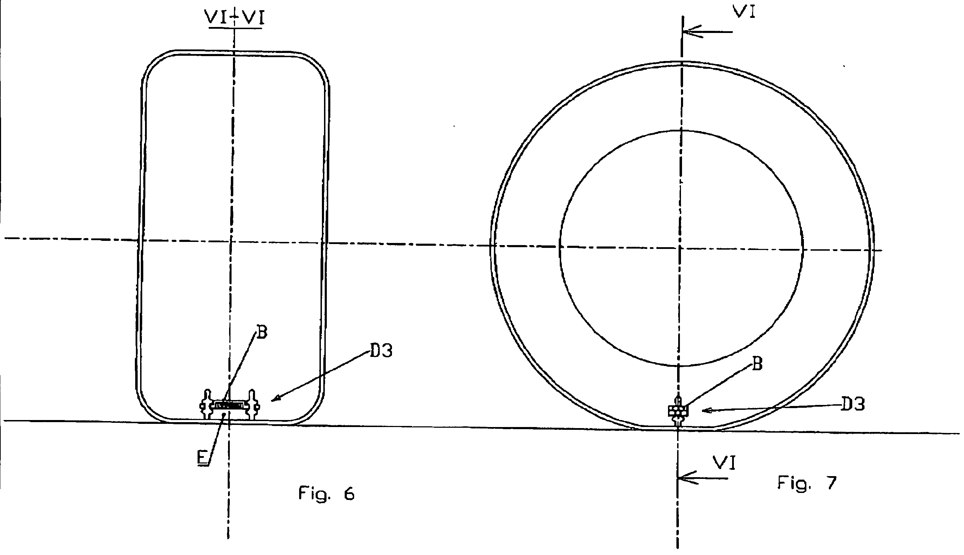

Les figures 6 et 7 illustrent un autre mode de réalisation d'un dispositif D3 où les projections sont disposées selon un plan perpendiculaire à celui illustré par les dessins des figures 1 à 5.

On comprend que le dispositif, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Dispositif de fixation d'un boîtier (B) de prise de mesure sur la paroi interne (100) d'un pneumatique (P), **CARACTÉRISÉ PAR LE FAIT QU'**il comprend au moins un élément d'entretoisement interposé entre le boîtier (B) et ladite paroi interne de façon à créer un espace (E) entre le boîtier (B) et ladite paroi interne (100).

2. Dispositif (D) selon la revendication 1, **CARACTÉRISÉ PAR LE FAIT QU'**il comprend au moins une projection (210, 220) constituant l'élément d'entretoisement dont une extrémité est fixée à ladite paroi interne (100) et se projetant vers l'intérieur dudit pneumatique (P), ledit boîtier (B) étant fixé à ladite projection (210, 220) à une certaine distance de ladite paroi interne de sorte qu'un espace (E) soit créé entre le boîtier (B) et ladite paroi interne d'où se dresse la projection (210, 220).

3. Dispositif (D) selon la revendication 2, **CARACTÉRISÉ PAR LE FAIT QUE** ladite projection (210, 220) est préformée d'une surface d'appui (211, 221) et de retenue (212, 222) pour le boîtier (B), disposée à une certaine distance de ladite paroi interne de sorte qu'un espace soit créé entre le boîtier (B) et ladite paroi interne d**'**où se dresse la projection (210, 220).

4. Dispositif (D) selon la revendication 2, **CARACTÉRISÉ PAR LE FAIT QUE** ladite projection (210, 220) se dresse à partir de la face interne (100) de la bande de roulement du pneumatique.

5. Dispositif (D) selon la revendication 2, **CARACTÉRISÉ PAR LE FAIT QU'**il comprend deux projections (210, 220).

6. Dispositif (D) selon la revendication 2, **CARACTÉRISÉ PAR LE FAIT QUE** ladite projection (210, 220) est préformée d'un changement de section afin de créer une surface d'appui (211, 221) pour le boîtier (B).

7. Dispositif (D) selon la revendication 2, **CARACTÉRISÉ PAR LE FAIT QUE** ladite projection (210, 220) comprend deux changements de sections créant deux épaulements entre lesquels se dispose ledit boîtier (B) afin de servir d'une part, de surface d'appui (211, 221) et d'autre part, de surface de retenue (212, 222).

8. Dispositif (D) selon la revendication 2, **CARACTÉRISÉ PAR LE FAIT QUE** ladite projection (210, 220) est réalisée dans un matériau élastique.

9. Dispositif (D) selon la revendication 2, **CARACTÉRISÉ PAR LE FAIT QUE** ladite projection (210, 220) est réalisée dans un matériau élastique et est préformée de sorte qu'une traction sur son extrémité libre assure le rétrécissement de la surface de retenue (212, 222) pour autoriser l'installation du boîtier (B).

10. Dispositif (D) selon la revendication 2, **CARACTÉRISÉ PAR LE FAIT QUE** ladite projection (210, 220) est collée à ladite paroi interne.

11. Dispositif (D) selon la revendication 2, **CARACTÉRISÉ PAR LE FAIT QUE** ladite projection (210', 220') est associée à la face supérieure d'une pièce plane (400) dont la face intérieure est collée à ladite paroi interne.

12. Dispositif selon la revendication 1, **CARACTÉRISÉ PAR LE FAIT QUE** ledit boîtier est préformé d'au moins une projection constituant l'élément d'entretoisement venant se fixer à la paroi interne du pneumatique en créant un espace entre ledit boîtier et ladite paroi interne.

13. Dispositif (D) selon la revendication 1 où le boîtier (B) comprend un capteur de pression (313), **CARACTÉRISÉ PAR LE FAIT QUE** ledit boîtier (B) est orienté de sorte que l'orifice de prise de mesure (316) donnant accès au capteur soit ouvert entre ledit boîtier (B) et la face interne (100) de la bande de roulement du pneumatique (P).

14. Dispositif (D) selon la revendication 13, **CARACTÉRISÉ PAR LE FAIT QUE** ledit capteur (313) est équipé d'un capuchon (317) évitant l'obstruction de son orifice de prise de mesure (316) lors du coulage de la matière encapsulante (315) dans le boîtier (B).

15. Procédé de fabrication d'un pneumatique (P), ledit pneumatique comprenant au moins une projection (210, 220) constituant un élément d'entretoisement dont une extrémité est fixée à la paroi interne (100) du pneumatique (P) et se projette vers l'intérieur dudit pneumatique (P), un boîtier (B) de prise de mesure étant fixé à ladite projection (210, 220) à une certaine distance de ladite paroi interne de sorte qu'un espace (E) soit créé entre le boîtier (B) et ladite paroi interne d'où se dresse la projection (210, 220), **CARACTÉRISÉ EN CE QU'**il consiste à mouler ladite au moins une projection (110, 120) constituant l'élément d'entretoisement, dans la paroi interne du pneumatique (P).

## Patentansprüche

1. Vorrichtung zum Befestigen eines Messgehäuses (B) auf der Innenwand (100) eines Reifens (P), **dadurch gekennzeichnet, dass** sie mindestens ein Abstandselement aufweist, das zwischen das Gehäuse (B) und die Innenwand derart eingefügt ist, dass ein Raum (E) zwischen dem Gehäuse (B) und der Innenwand (100) geschaffen wird.

2. Vorrichtung (D) nach Anspruch 1, **dadurch gekennzeichnet, dass** sie mindestens einen Vorsprung (210, 220) umfasst, der das Abstandselement bildet, von dem ein Ende an der Innenwand (100) befestigt ist und in das Innere des Reifens (P) vorsteht, wobei das Gehäuse (B) an dem Vorsprung (210, 220) in einer bestimmten Entfernung von der Innenwand derart befestigt ist, dass der Raum (E) zwischen dem Gehäuse (B) und der Innenwand, von der sich der Vorsprung (210, 220) erhebt, geschaffen wird.

3. Vorrichtung (D) nach Anspruch 2, **dadurch gekennzeichnet, dass** der Vorsprung (210, 220) mit einer Stütz- (211, 221) und Rückhalteoberfläche (212, 222) für das Gehäuse (B) vorgeformt ist, die in einer bestimmten Entfernung von der Innenwand derart angeordnet ist, dass ein Raum zwischen dem Gehäuse (B) und der Innenwand, von der sich der Vorsprung (210, 220) erhebt, geschaffen wird.

4. Vorrichtung (D) nach Anspruch 2, **dadurch gekennzeichnet, dass** sich der Vorsprung (210, 220) ausgehend von der Innenseite (100) der Lauffläche des Reifens erhebt.

5. Vorrichtung (D) nach Anspruch 2, **dadurch gekennzeichnet, dass** sie zwei Vorsprünge (210, 220) umfasst.

6. Vorrichtung (D) nach Anspruch 2, **dadurch gekennzeichnet, dass** der Vorsprung (210, 220) mit einer Querschnittänderung vorgeformt ist, um eine Stützoberfläche (211, 221) für das Gehäuse (B) zu schaffen.

7. Vorrichtung (D) nach Anspruch 2, **dadurch gekennzeichnet, dass** der Vorsprung (210, 220) zwei Querschnittänderungen umfasst, die zwei Ansätze schaffen, zwischen welchen das Gehäuse (B) liegt, um einerseits als Stützoberfläche (211, 221) und andererseits als Rückhalteoberfläche (212, 222) zu dienen.

8. Vorrichtung (D) nach Anspruch 2, **dadurch gekennzeichnet, dass** der Vorsprung (210, 220) aus einem elastischen Werkstoff hergestellt ist.

9. Vorrichtung (D) nach Anspruch 2, **dadurch gekennzeichnet, dass** der Vorsprung (210, 220) aus einem elastischen Werkstoff hergestellt und derart vorgeformt ist, dass ein Zug an seinem freien Ende das Schrumpfen der Rückhalteoberfläche (212, 222) sicherstellt, um die Installation des Gehäuses (B) zu erlauben.

10. Vorrichtung (D) nach Anspruch 2, **dadurch gekennzeichnet, dass** der Vorsprung (210, 220) an die Innenwand geklebt ist.

11. Vorrichtung (D) nach Anspruch 2, **dadurch gekennzeichnet, dass** der Vorsprung (210□, 220□) mit der Oberseite eines flachen Teils (400) verbunden ist, dessen Innenseite an die Innenwand geklebt ist.

12. Vorrichtung nach Anspruch 1, **dadurch gekennzeichnet, dass** das Gehäuse mit mindestens einem Vorsprung vorgeformt ist, der das Abstandselement bildet, das sich an der Innenwand des Reifens befestigt, indem zwischen dem Gehäuse und der Innenwand ein Raum geschaffen wird.

13. Vorrichtung (D) nach Anspruch 1, wobei das Gehäuse (B) einen Drucksensor (313) umfasst, **dadurch gekennzeichnet, dass** das Gehäuse (B) derart ausgerichtet ist, dass die Messöffnung (316), die zu dem Sensor Zugang gibt, zwischen dem Gehäuse (B) und der Innenseite (100) der Lauffläche des Reifens (P) offen ist.

14. Vorrichtung (D) nach Anspruch 13, **dadurch gekennzeichnet, dass** der Sensor (313) mit einer Kappe (317) ausgestattet ist, die das Verlegen seiner Messöffnung (316) beim Gießen des Kapselmaterials (315) in das Gehäuse (B) verhindert.

15. Herstellungsverfahren eines Reifens (P), wobei der Reifen mindestens einen Vorsprung (210, 220) umfasst, der ein Abstandselement bildet, von dem ein Ende an der Innenwand (100) des Reifens (P) befestigt ist und in das Innere des Reifens (P) vorsteht, wobei ein Messgehäuse (B) an dem Vorsprung (210, 220) in einer bestimmten Entfernung von der Innenwand derart befestigt ist, dass ein Raum (E) zwischen dem Gehäuse (B) und der Innenwand geschaffen wird, von der sich der Vorsprung (210, 220) erhebt, **dadurch gekennzeichnet, dass** es darin besteht, den mindestens einen Vorsprung (110, 120), der das Abstandselement bildet, in der Innenwand des Reifens (P) zu formen.

## Claims

1. Device for fixing a measurement box (B) to the internal wall (100) of a tyre (P),
**characterized by** the fact that it comprises at least one bracing element interposed between the box (B) and said internal wall so as to create a space (E) between the box (B) and said internal wall (100).

2. Device (D) according to claim 1, **characterized by** the fact that it comprises at least one projection (210, 220) constituting the bracing element, one end of which is fixed to said internal wall (100) and projecting towards the inside of said tyre (P), said box (B) being fixed to said projection (210, 220) at a certain distance from said internal wall so that a space (E) is created between the box (B) and said internal wall where the projection (210, 220) arises.

3. Device (D) according to claim 2, **characterized by** the fact that said projection (210, 220) is preformed from a support (211, 221) and holding (212, 222) surface for the box (B), disposed at a certain distance from said internal wall so that a space is created between the box (B) and said internal wall where the projection (210, 220) arises.

4. Device (D) according to claim 2, **characterized by** the fact that said projection (210, 220) arises from the internal face (100) of the tyre tread.

5. Device (D) according to claim 2, **characterized by** the fact that it comprises two projections (210, 220).

6. Device (D) according to claim 2, **characterized by** the fact that said projection (210, 220) is preformed from a change in cross section in order to create a support surface (211, 221) for the box (B).

7. Device (D) according to claim 2, **characterized by** the fact that said projection (210, 220) comprises two changes in cross section creating two shoulders between which said box (B) is arranged so as to serve firstly as a support surface (211, 221) and secondly as a holding surface (212, 222).

8. Device (D) according to claim 2, **characterized by** the fact that said projection (210, 220) is produced from an elastic material.

9. Device (D) according to claim 2, **characterized by** the fact that said projection (210, 220) is produced from an elastic material and is preformed so that traction on its free end narrows the holding surface (212, 222) in order to enable the box (B) to be installed.

10. Device (D) according to claim 2, **characterized by** the fact that said projection (210, 220) is adhesively bonded to said internal wall.

11. Device (D) according to claim 2, **characterized by** the fact that said projection (210', 220') is associated with the top face of a flat piece (400) the internal face of which is adhesively bonded to said internal wall.

12. Device according to claim 1, **characterized by** the fact that said box is preformed from at least one projection constituting the bracing element coming to be fixed to the internal wall of the tyre while creating a space between said box and said internal wall.

13. Device (D) according to claim 1, where the box (B) comprises a pressure sensor (313), **characterized by** the fact that said box (B) is oriented so that the measurement orifice (316) giving access to the sensor is open between said box (B) and the internal face (100) of the tread of the tyre (P).

14. Device (D) according to claim 13, **characterized by** the fact that said sensor (313) is equipped with a cap (317) preventing the obstruction of its measurement orifice (316) when the encapsulating material (315) is poured into the box (B).

15. Method for manufacturing a tyre (P), said tyre comprising at least one projection (210, 220) constituting a bracing element, one end of which is fixed to the internal wall (100) of the tyre (P) and projects towards the inside of said tyre (P), a measurement box (B) being fixed to said projection (210, 220) at a certain distance from said internal wall so that a space (E) is created between the box (B) and said internal wall from which the projection (210, 220) arises, **characterized in that** it consists of moulding said at least one projection (110, 120) constituting the bracing element, in the internal wall of the tyre (P).
